# EUROPEAN PATENT SPECIFICATION

(11) **EP 3 469 544 B1**
(45) Date of publication and mention of the grant of the patent: **25.11.2026**
(21) Application number: 17813998.6
(22) Date of filing: 14.06.2017
(51) Int. Cl.: G08G 1/123, H04W 4/02, G07B 15/02, G06Q 50/40, H04W 4/021

(54) **TRIP TERMINATION DETERMINATION FOR ON-DEMAND TRANSPORT**
BESTIMMUNG DES ENDES EINER REISE FÜR DEN ON-DEMAND-VERKEHR
DÉTERMINATION DE FIN DE VOYAGE POUR TRANSPORT À LA DEMANDE

(30) Priority: 14.06.2016 US 201615182217
(43) Date of publication of application: 17.04.2019
(73) Proprietor: Uber Technologies, Inc., San Francisco, CA 94158 (US)
(72) Inventor: BRINIG, Kevin, San Francisco, California 94103 (US); IOFFE, Maksim, San Francisco, California 94103 (US); LAYTON, Brandon, San Francisco, California 94103 (US); SUMERS, Theodore, San Francisco, California 94103 (US); KADOUS, Mohammed Waleed, San Francisco, California 94103 (US)
(74) Representative: Samson & Partner Patentanwälte mbB
(86) International application number: PCT/US2017/037421
(87) International publication number: WO 2017/218637

(56) References cited:
- EP-A1- 2 767 962
- EP-B1- 1 156 462
- EP-B1- 2 700 063
- US-A1- 2009 088 924
- US-A1- 2010 136 944
- US-A1- 2011 301 985

## Description

### RELATED APPLICATIONS

This application claims the benefit of U.S. Patent Application No. 15/182,217, filed June 14, 2016.

### TECHNICAL FIELD

This invention relates generally to the field of transportation service. More particularly, the invention relates to a transport arrangement service to determine a point of trip termination for a trip.

### BACKGROUND

On-demand transportation services are technology-based services which arrange trips for a variety of purposes (e.g., user transport, package delivery) using available transport resources (e.g., vehicles of users). Such services can be technologically-centric with respect to, for example, the manner in which the services use computing devices of users for tasks such as pairing vehicles (or drivers) to transportation requests, enabling limited or controlled communications between parties or through the network service, remotely monitoring vehicles and resources in use, calculating fares and a variety of other tasks. On a group level, such services can aggregate information (e.g., position, state) from numerous users in order to determine information such as traffic congestion, supply/demand and various other facets of the service.

A service arrangement system can arrange an on-demand service, such as a transport service, to be performed by a service provider (e.g., driver) for a requesting user through the use of a mobile computing device. Typically, when the vehicles arrives at a destination (e.g., selected by the rider), the driver provides input signifying the trip has ended. The service arrangement system can use information about the route to determine the price for the transport service, and such calculation typically involves determining the location where the driver identifies as being the point of trip termination.
Document US 2011/0301985 A1 relates to a system and method for enabling transportation to be arranged for individuals carrying handsets or mobile devices. In some embodiments, a customer can transmit a request for transport from a given customer geographic location. A service may handle the request by selecting a driver for the customer.
Document EP 2 700 063 B1 relates to a device for requesting a vehicle, such as a taxi, to a location associated with the device. In preferred embodiments, the device is arranged to be fixedly secured to a surface, such as in a bar, restaurant or hotel, and to provide feedback to users as to the status of any vehicle requests. The device may form a component part of a vehicle request management system arranged to manage requests by a user for a taxi or other similar form of transport.

### SUMMARY OF THE INVENTION

The invention provides subject-matter as defined in the independent claims, preferred embodiments thereof defined in the dependent claims.

### BRIEF DESCRIPTION OF THE DRAWINGS

FIG. 1 illustrates an example system to programmatically a point of trip determination in connection with a transport service.
FIG. 2A illustrates an example method for programmatically determining a point of trip termination in connection with a trip arranged through a transport service.
FIG. 2B illustrates another example method for programmatically determining a point of trip termination in connection with a trip arranged through a transport service.
FIG. 3 illustrates another example method for programmatically determining a point of trip termination in connection with a trip arranged through a transport service.
FIG. 4 is a block diagram that illustrates a mobile computing device upon which embodiments described herein may be implemented.
FIG. 5 is a block diagram that illustrates a computer system upon which examples described herein may be implemented.

### DETAILED DESCRIPTION

Examples includes a transport arrangement service that determines a point of termination for a trip based at least in part on passive information collected from a computing device of a driver. The passive information may include computer-generated data that is not user-initiated or generated through user intent or input. Multiple types of passive information may be collected and utilized in determining the point of termination for a trip. Examples of passive information collected from a computing device include location information (e.g., such as provided from a GPS component of a computing device), motion sensor information (e.g., such as provided by an accelerometer or gyroscope component of a computing device), environmental information (temperature, barometer, etc.) within the passenger cabin, audio input (such as recorded by the microphone of a computing device) or other types of sensor information (e.g., vehicle telemetry information such as provided through through an on-board computer of vehicle to collect On-Board Diagnostic data).

In examples described herein, the system can be implemented using a mobile computing device of a driver. In some variations, the driver's mobile computing device can execute a service application (e.g., "app" which the user can download), and the service application can implement operations that include (i) communicating over a network with a transport arrangement service, (ii) communicating a state of the driver (e.g., that runs on the driver device (e.g., a driver application).

As used herein, a client device, a driver device, a computing device, and/or a mobile computing device refer to devices corresponding to desktop computers, cellular devices or smartphones, personal digital assistants (PDAs), laptop computers, tablet devices, etc., that can provide network connectivity and processing resources for communicating with a remote system(s) over one or more networks, such as a service arrangement system. In one example, a driver device can also correspond to custom hardware of a vehicle, such as an in-vehicle computing device, that has network connectivity and location-determination capabilities.

Still further, examples described herein relate to a variety of location-based (and/or on-demand) services, such as a transport service, a food truck service, a delivery service, an entertainment service, etc. to be arranged between users and service providers. In other examples, a service arrangement system can be implemented by any entity that provides goods or services for purchase through the use of computing devices and network(s). For purpose of simplicity, in examples described herein, the service arrangement system can correspond to a transport arrangement system that arranges transport services to be provided for riders by drivers of vehicles.

One or more examples described herein provide that methods, techniques, and actions performed by a computing device are performed programmatically, or as a computer-implemented method. Programmatically, as used herein, means through the use of code or computer-executable instructions. These instructions can be stored in one or more memory resources of the computing device. A programmatically performed step may or may not be automatic.

One or more examples described herein can be implemented using programmatic modules, engines, or components. A programmatic module, engine, or component can include a program, a sub-routine, a portion of a program, or a software component or a hardware component capable of performing one or more stated tasks or functions. As used herein, a module or component can exist on a hardware component independently of other modules or components. Alternatively, a module or component can be a shared element or process of other modules, programs or machines.

Some examples described herein can generally require the use of computing devices, including processing and memory resources. For example, one or more examples described herein may be implemented, in whole or in part, on computing devices such as servers, desktop computers, cellular or smartphones, personal digital assistants (e.g., PDAs), laptop computers, printers, digital picture frames, network equipment (e.g., routers) and tablet devices. Memory, processing, and network resources may all be used in connection with the establishment, use, or performance of any example described herein (including with the performance of any method or with the implementation of any system).

Furthermore, one or more examples described herein may be implemented through the use of instructions that are executable by one or more processors. These instructions may be carried on a computer-readable medium. Machines shown or described with figures below provide examples of processing resources and computer-readable mediums on which instructions for implementing examples described herein can be carried and/or executed. In particular, the numerous machines shown with examples described herein include processor(s) and various forms of memory for holding data and instructions. Examples of computer-readable mediums include permanent memory storage devices, such as hard drives on personal computers or servers. Other examples of computer storage mediums include portable storage units, such as CD or DVD units, flash memory (such as carried on smartphones, multifunctional devices or tablets), and magnetic memory. Computers, terminals, network enabled devices (e.g., mobile devices, such as cell phones) are all examples of machines and devices that utilize processors, memory, and instructions stored on computer-readable mediums. Additionally, examples may be implemented in the form of computer-programs, or a computer usable carrier medium capable of carrying such a program.

### SYSTEM DESCRIPTION

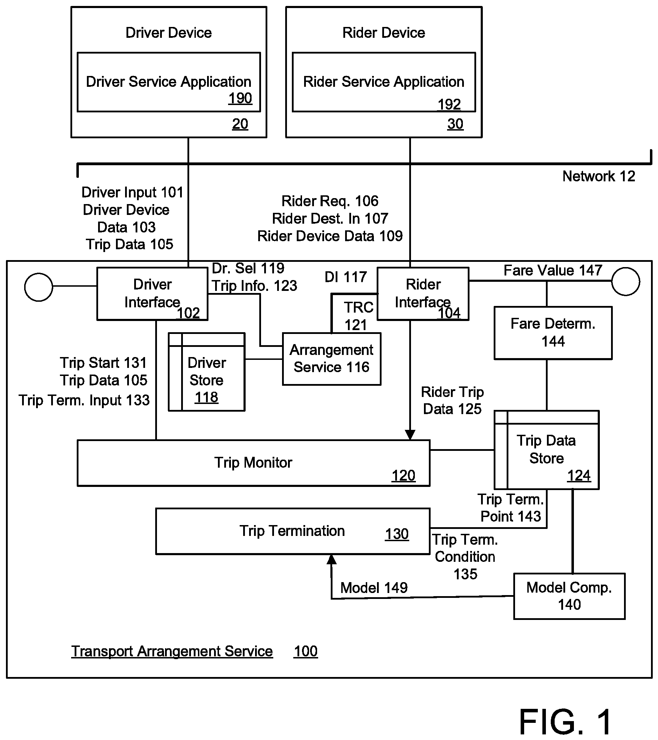

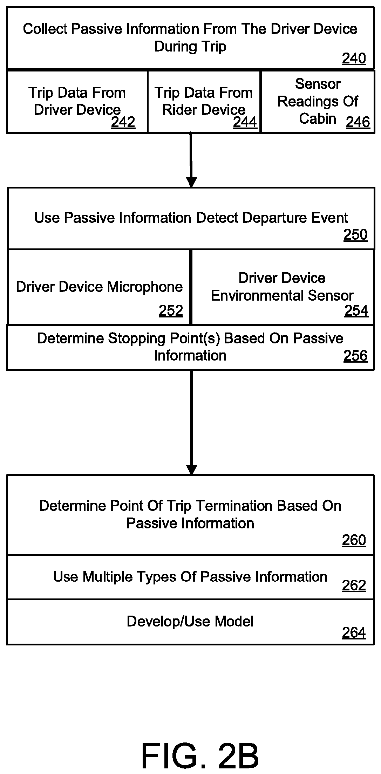

FIG. 1 illustrates a transport arrangement system to programmatically determine a point of trip termination, according to one or more examples. According to some examples, a transport arrangement system 100 as shown with an example of FIG. 1 can validate and/or correct a point of trip termination as identified by a driver on a trip. The point of trip termination can correspond to a location, as defined by, for example, longitude and latitude where a trip is deemed to end. In some examples, the service 100 determines the point of trip determination using driver input and passive information collected from the vehicle. In variations such as described with an example of FIG. 2B, the service 100 can independently determine a point of trip termination without input from driver or rider.

**In** an example of FIG. 1, functionality for determining the point of trip termination is performed using computing resources (e.g., one or more servers) of the service 100. In variations, the functionality for determining the point of trip termination is distributed, using, for example, logical components or processes that are executed on, for example, computing devices of the driver or rider.

With further reference to FIG. 1, the transport arrangement service 100 includes a driver interface 102 a rider interface 104, a transport arrangement component 116, a trip monitor 120 and a trip termination determinator 130. The driver interface 102 includes processes for establishing separate and independent network connections with computing devices of drivers ("driver devices 20"). The driver devices 20 may communicate, via network 12, driver identification, and information about the service state of the driver. For example, the operational state of a driver can include state information that indicates whether the driver is available (or not available) to provide a transport service that is facilitated by the transport arrangement service 100.

Likewise, the rider interface 104 includes processes for establishing separate and independent network connections with competing devices of riders. The rider devices 30 may communicate, via the network 12, rider identification and information about the service state of the rider. For example, the riders may include those users of the transport arrangement service 100 who, in a given time period, are receiving transport, have requested but have not yet received transport, and/or may or otherwise are capable of requesting transport.

According to some examples, the driver devices 20 can correspond to mobile computing devices that are operated or otherwise associated with corresponding drivers. In some examples, the driver devices correspond to multifunctional wireless devices used for Web-enabled activities, cellular and/or other wireless communications, including messaging (e.g., SMS, email, instant messaging) and telephony. By way of example, the driver device can correspond to a smartphone or feature phone, or to a cellular-enabled tablet device. In some variations, the driver device 20 can be integrated with a corresponding vehicle that is assigned or otherwise associated with the driver for purpose of providing transport services. Similarly, the rider devices 30 can correspond to mobile computing devices that are operated by riders. Examples of rider devices 30 may also include multifunctional wireless devices used for Web-enabled activities, cellular and/or other wireless communications, including messaging (e.g., SMS, email, instant messaging) and telephony. In some examples, the driver device 20 and/or the rider device 30 can correspond to devices of a type that users typically carry on their persons in everyday activities, such as a cellular telephony device, tablet, or wearable electronic device.

Each of the driver and rider devices 20, 30 can operate a corresponding service application 190, 192 to enable the respective driver or rider to communicate with the service 100 via a network 12, and to utilize the service 100 in connection with providing (by driver) or receiving (by rider) transport services. Each of the service applications 190, 192 may provide the respective driver and rider device 20, 30 of the particular user class (driver or rider) with functionality to enable or facilitate the user in utilizing the service 100. For the driver, such functionality can include (i) automatically interfacing with components of the driver device 20, including hardware and software resources of the driver device 20, in order to obtain and transmit driver device data 103 (e.g., driver identification, driver location and driver service state) to the service 100; (ii) receiving transport requests or assignments based on criteria that includes the location of the driver's vehicle and/or the driver's vehicle type; (iii) receiving routing information for enabling or facilitating the driver in fulfilling a transport request or assignment; and/or (iv) communicating status of the driver or trip on which the driver is assigned.

For the rider devices 30, the service application 192 can implement functionality to (i) automatically interface with components of the rider device 30, including hardware and software resources of the rider device 30, in order to obtain and transmit rider device data 109; (ii) provide user interfaces for enabling the rider to make transport request and to specify information such as pick-up and/or drop-off locations; (iii) provide riders with status or feedback about transport requests and /or trips which the rider is on or recently received; and/or (iv) enable or provide customer services and functionality, such as enabling customers to link funds, provide rating or feedback for services received, and/or generate customer complaints. When devices 20, 30 of respective drivers and riders execute the corresponding service applications 190, 192, the devices 20, 30 may operate as extensions or information sources of the service 100.

In an example, drivers may be tracked by the service 100 via the respective driver interface 102. The service 100 may maintain an active driver data store 118 based at least in part on the driver data 103 communicated from the driver device 20. The driver data 103 can identify the driver, identify a current (or expected) location of the particular driver, and/or identify a service state of the driver. By way of example, the service state of the driver can correspond to available or not available. In other examples, the service state of the driver can correspond to available, en route to pick-up, or on trip.

In an example of FIG. 1, a given rider operates a corresponding rider device 30 in order to signal a ride request 106 via the service application 192 running on the rider device 30. The ride request 106 can specify the rider's identifier and a pick-up location for the rider's transport request. Additionally, in some examples, the rider can interact with the rider device 30 via the service application 192 in order to specify the rider destination input 107 for the ride request. For example, the rider may specify an address or interact with a map interface in order to drop a pin corresponding to the drop off location desired by the rider. The rider interface 104 can receive the ride request 106 (including the rider destination input 107), and then initiate a transport request signal 121 to the transport arrangement component 116. Among other functions, the transport arrangement component 116 can perform operations that include identifying and pairing a driver with a given rider request 106. In connection with a given rider request 106, the transport arrangement component 116 may also receive a destination input 117, corresponding to or based off of the rider destination input 107(e.g., rider-specified drop-off location).

The transport arrangement component 116 may select a driver from the active driver data store 118, and signal driver selection 119 and trip information 123 for the transport request 106. The driver selection 119 may identify the driver. The driver interface 102 may signal the trip information 123 to the selected driver, where the trip information includes a rider identifier and a pick-up location of the trip. Additionally, the trip information 123 may include the drop-off location as specified by the rider destination input 107 the transport request 106. The service application 190 of the selected driver can disclose the trip information 123 to the driver in accordance with a protocol. For example, the destination specified by the rider may be disclosed after the trip has been initiated.

The trip may start when the rider enters the vehicle. In some examples, the trip start may be signaled by the driver providing a trip start input 131. At the end of the trip, the driver may also provide a trip termination input 133. Each of the trip start 131 and trip termination inputs 133 can be associated with a location, determined from, for example, the service application 190 interacting with the GPS component of the driver device 20. While the trip is in progress, the driver interface 102 receives trip data 105 from the driver device 20. The trip data 105 may include sensor data from the driver device 20. The trip data 105 includes position information, determined from the service application 190 interfacing with a GPS device of the driver device 20. The trip data 105 can further include acceleration data from the service application 190 interfacing with an accelerometer and/or gyroscope of the driver device 20. Still further, the trip data 105 can include sensor data from other sensors of the driver device 20, such as a magnetometer, camera, or microphone of the driver device 20. In other variations, the trip data 105 includes environmental sensor data, from sensor devices such as thermometers or barometers. Still further, the trip data 105 can include data which the driver device 20 acquires from an onboard computer of the vehicle (e.g., telemetry data, OBD data), or through interaction with integrated or embedded sensor devices of the vehicle.

From the driver device 20, the trip monitor 120 may receive or collect the trip start input 131, the driver trip data 105 for the trip in progress, and the trip termination input 133. In variations, the trip monitor 120 may also receive rider trip data 125 from the rider device 30, via the service application 192 communicating with the rider interface 104 of the service 100.

The trip data store 124 represents memory which holds the trip data 105, 125, as well as trip start input 131 and trip termination input 133 for determining the beginning and end of the trip. The trip data store 124 may also include rider-inputs such as the rider destination input 107 and/or the pick-up location.

The trip termination determinator 130 may monitor the trip data store 124 for a condition that signals the end of the trip. According to some examples, a trip determination condition 135 can correspond or correlate to the trip termination input 133 provided by the driver, via the service application 190. As an addition or alternative, the rider input can be used for the trip determination condition 135. Still further, the trip determination condition 135 can be determined from comparing trip data 105, 125 obtained from the respective driver and rider devices 20, 30. For example, the trip data 105, 125 obtained from the respective driver and rider devices 20, 30 can correspond to position information from each device, and the trip data store 124 may generate the trip determination condition 135 when the position information of the driver and rider is sufficiently disparate to indicate that the rider and driver or not in the same vehicle.

In some variations, the trip data 105 can include sensor data from at least one of the driver or rider computing device 20, 30, signifying the termination of the trip. In one implementation, a microphone of the driver device 20 may listen for and detect the sound of a car door closing. When the sound is heard, the driver device 20 may infer the trip is terminated, as the rider has likely left the vehicle. In such an example, the trip termination condition 135 can correspond to an audio input signal that matches to the sound of the vehicle's door opening and/or closing.

In other variations, the trip data 105 may include sensor data (e.g., from a barometer of the driver computing device 20) which detects from sensors which can detect environmental conditions such as temperature or barometric changes within the vehicle. When the car door opens and closes (presumably to allow for the rider to leave), the change in environmental conditions (e.g., barometric reading) can signify the termination of the trip. In such an example, the trip termination condition 135 can correspond to an environmental sensor reading (e.g., barometric value, temperature) which is indicative of the vehicle goor opening and closing.

Once the trip termination determinator 130 determines that trip termination condition 135 is present, the trip termination determinator 130 can validate a point of the trip termination. When trip termination condition 135 is determined from, for example, driver termination input 133, the location associated with the driver termination input 133 can be used as a driver-specified point of termination. The trip termination determinator 130 can process the trip data 133 to validate (or invalidate) the point of termination. In an example of FIG. 1, the trip termination determinator 130 can validate the point of trip termination 143 and store the point of trip termination with the trip data store 124. In some examples, other components of the service 100, such as fare determination logic 144, can interface with the trip data store 124 in order to determine the fare 147 for the trip based on the validated point of trip termination 143. The fare determination component 144 can output the corresponding fare 147 (or value for fare) to the service applications 190, 192 of the corresponding driver and rider devices 20, 30, via the respective driver and rider interfaces 102, 104.

The trip data 105 is analyzed to detect whether the driver's vehicle came to a stop at or near the driver-specified point of termination (or when the driver termination input 133 is received). In one implementation, if the driver-specified point of termination is deemed equivalent to the vehicle's stopping location, then the driver-specified point of termination can be validated as the trip determination point 143.

According to various examples, the trip termination determinator 130 may be implemented with rules or other logic for validating, correcting and/or refining the driver-specified point of termination as the validated point of termination 143. According to some examples, the trip termination determinator 130 responds to trip termination condition 135 by determining whether the driver's vehicle stopped within a set duration of time from the location that correlates to the driver termination input 133. In one implementation, if the vehicle is determined to have stopped in that set duration of time, then the location where the vehicle was determined to have stopped can be assumed as the point of termination 143 if that location is different from the location correlating to the driver termination input 133.

In variations, the trip termination determinator 130 can receive the rider destination input 107. The point of trip termination 143 can correspond to the location where the vehicle stopped closest to the rider destination input 107. In other examples, the trip termination determinator 130 can determine the point of trip termination 143 to correspond to the location where the vehicle stopped immediately after a location of the rider destination input 107.

In some examples, a model determination component 140 may interface with the trip data store 124 to determine training data corresponding to correlations between (i) a location corresponding to where the driver indicated the trip to have terminated, or alternatively, where sensor information from the driver or rider computing device 20, 30 indicates that the trip has terminated; (ii) the destination, based on the rider destination input; and/or (iii) the point of termination, as determined programmatically from, for example, validating, correcting or refining the termination point indicated by the driver termination input 133. An output of the model determination component 140 can be a model 149 which can be implemented by the trip termination determinator 130 to determine a model candidate point of termination 143 based on trip data 105, driver termination input 133 and/or rider destination input 107. In determining or training the model 149, the model determination component 140 may also receive input from the rider and/or driver regarding the model candidate point of termination 143 so that the model is supervised when trained. The model 149 can be based on data from a specific driver, a group of drivers which share a particular set of characteristics (drivers in a particular geographic region) or trips which share a particular set of characteristics.

In some variations, the model determination component 140 generates the model 149 to identify the point of trip termination using sensor input detected from the driver computing device 20, signifying the departure of the rider (e.g., door opens and closers, barometric reading within vehicle changes) and trip data 105. Thus, in such variations, no input may be needed from the driver when determining when the trip ends.

### METHODOLOGY

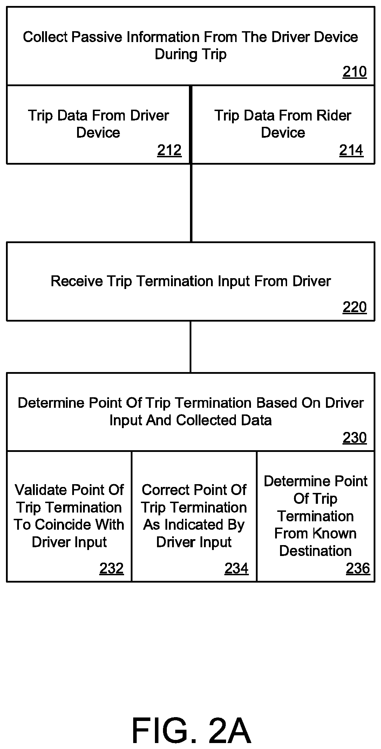

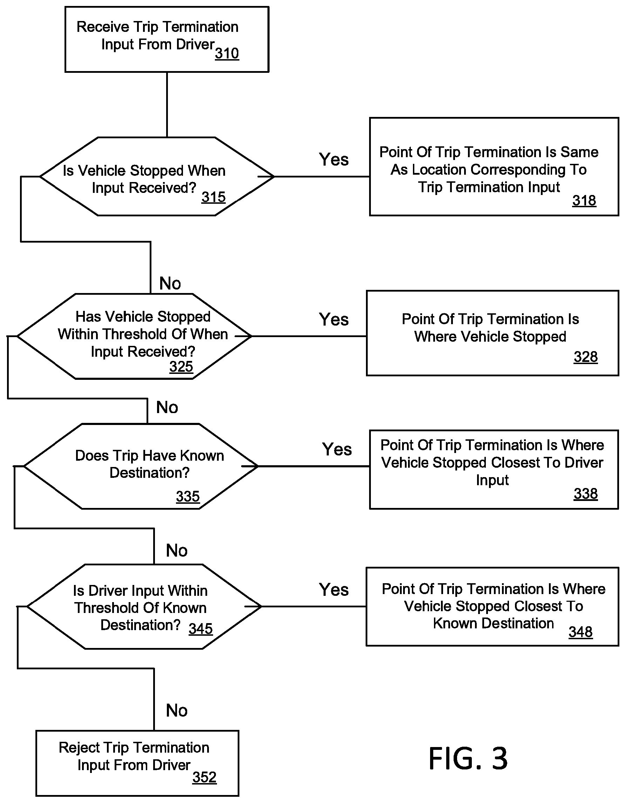

FIGS. 2A, 2B and 3 illustrate example methods for programmatically determining points of trip termination in connection with trips arranged through a transport service. Methods such as described by examples of FIGS. 2A, 2B and 3 are implemented using components described with an example of FIG. 1. Accordingly, references made to elements of FIG. 1 are for purposes of illustrating a suitable element or component for performing a step or sub-step being described. For purpose of simplicity, the example methods of FIGS. 2A, 2B and 3 are described as being performed by the service 100, operating in conjunction with data received from a driver device.

With reference to FIG. 2A, the service 100 operates to collect passive information from the driver device 20 (210). The passive information includes data generated from the driver device 20 (212) that is not user initiated or generated through user intent or input. Rather, the passive information can include clock signals, GPS position information, and other sensor data generated from the driver device 20 (e.g., data from reading accelerometer or gyroscope, microphone input, camera input, etc.) in connection with a trip. In an example of FIG. 1, the trip data 105 can include passive information collected from the driver device 20. In some variations, passive information may also include data generated from the rider device 30 (214). For example, the passive information may include some or all of the passive information collected from the driver device 20.

According to some examples, the service 100 receives input from the driver signaling the trip has terminated (220). In an example of FIG. 1, the driver provides trip termination input 133, and the trip termination input 133 is correlated to a particular location (e.g., using the GPS device of the driver device 20).

The service 100 operates to determine the point of trip termination based on the driver input and the passive information collected from the driver device 20 (230). The passive information includes trip data 105 from the driver device 20, including GPS data, accelerometer and/or gyroscope data and/or microphone data. Some or all of the same information may be collected as part of the trip data 125 for the rider device 30. The trip data 105, 125, along with the driver termination input 133 are used to determine (or approximate) the point of trip termination for the particular trip.

According to the invention, the trip data 105, 125 is used to validate the point of termination, which may initially correspond to the location corresponding to where the trip termination input 133 was signaled (232). The location of the trip termination input 133 is identified as the point of trip termination if that location is approximately the location of the where the vehicle came to a stop, as determined from the trip data 105.

**The** trip data 105, 125 is used to correct the point of termination, as initially determined by the location corresponding to the termination input 133 (234). In one scenario, the driver may signal the trip termination input 133 too soon, when, for example, the vehicle is in motion and/or a distance from the destination as identified from the rider destination input 107. When the trip termination input is signaled too soon, the service 100 can extend the trip to, for example, the first location after the trip termination input 133 when the vehicle stops.

In another scenario, the driver may signal the trip termination input 133 too late (e.g., the driver forgets to stop the trip). For example, the vehicle may be in motion when the trip termination input 133 is received from the driver. The trip data 105 may be analyzed to determine when the vehicle was most recently stopped relative to the location of the vehicle corresponding to the trip termination input 133. If the vehicle was stopped before the location corresponding to the trip termination input 131, the service 100 may shorten the trip based on an assumption that the trip ended when the vehicle stopped preceding receipt of the trip termination input 131 from the driver.

The trip termination input 131 may also be deemed too late if the trip termination input 131 is received after the vehicle passes the drop-off location, as identified by the rider destination input 107. As described with other examples, the trip data 105 may be analyzed to determine the closest location closest where the vehicle is determined to have stopped as compared to the drop-off location specified by the rider destination input 107.

A vehicle stopping location, as determined from the trip data 105, is used as the point of termination in place of the location indicated by the driver's termination input 133 (236). The location corresponding the trip termination input 133 is compared to the closest location where the trip data 105 indicates the vehicle has stopped to end the trip. If the distance exceeds a threshold, the location where the vehicle is indicated to have stopped may replace the location corresponding to the trip termination input 133 as the point of termination for the trip.

In some examples, the driver device 20 may be configured to continuously ping for the rider device (once the ride has initiated) such that when the rider exits the vehicle, the loss of proximity by the rider device is instantly detected. As an addition or alternative, the driver device 20 can utilize a microphone to detect when the vehicle's car door opens and closes. Still further, the driver computing device 20 may include sensor devices for detecting changes in environmental conditions, such may be present when car doors open and close. These scenarios provide examples of when the driver device 20 may operate to automatically determine the trip had ended, without any affirmative input from the driver or rider. In such cases, the trip termination determinator 130 can utilize trip data 105 (e.g., position data, velocityO and implement logic to validate or correct automated determinations of trip terminations using sensor data that identifies when the rider has left the vehicle.

While an example of FIG. 2A provides for use of passive data in conjunction with driver transport termination input, in variations, the driver or rider computing device can automate detection of when a given trip ends. As described, an example of FIG. 2B may be implemented to determine the point of trip determination with accuracy and without input from the driver.

The service 100 collects passive information from computing devices that are within the vehicle during the trip (240). In one implementation, this includes a computing device of the driver which communicates trip data 105 (242). As an addition or variation, the computing device can be that of the rider (244). In a variation shown by FIG. 2B, the passive information may include GPS data and/or motion information (e.g., accelerometer readings), as well as sensor readings from the cabin of the vehicle (246). For example, the passive information may include audio input, corresponding to sounds recorded by a microphone of the driver device 20 of the vehicle's cabin. As an addition or variation, the passive information may include sensor data for the cabin of the vehicle (e.g., barometric information, temperature).

In an example of FIG. 2B, the service 100 detects, from the passive information, a departure event that is indicative of the rider leaving the vehicle (250). The detection may be of an event that is caused by a vehicle door, or more specifically, a backseat door and/or passenger-side door, being opened. In one implementation, the determination is based on a microphone within the vehicle detecting an audio signal that is a match to an indicator of the user leaving the vehicle (252). For example, the audio signal may match to the sound of the vehicle's door opening and closing, and/or the rider and driver saying goodbye to one another. The microphone within the vehicle may be provided by the driver device 20. In variations, the microphone may be provided by the rider device 30, or through another computing device or device (e.g., vehicle computer).

In a variation, the determination is based on the environmental sensor of the driver device 20 detecting a change in an environmental condition or characteristic of the vehicle which is indicative of the vehicle door opening and closing (254). For example, the driver device 20 may include a barometric sensor that detects when the barometric pressure of the cabin drops. In a variation, the driver device 20 may include a thermometer that detects a temperature change in the cabin, which in turn can be correlated to exposure by the cabin of outside air. Depending on the implementation, the environmental sensor may be provided with the driver device 20, the rider device 30, and/or other sensor device (or computing device) that is integrated or carried within the vehicle.

In some variations, the service 100 collects passive information to determine one or more stopping points of the vehicle during the trip (256). In one implementation, the position information is collected for the vehicle over the course of the trip, and then used to approximate the velocity of the vehicle and/or instances when the vehicle may have stopped.

The point of trip determination can be determined based on the passive information (260). In some implementations not forming part of the claimed invention, the service 100 can determine the point of trip determination without receiving or otherwise using input from the driver (e.g., without receiving trip termination input 133). In one implementation, the passive information includes sensor data that detects a door of the vehicle opening and closing. For example, a microphone of the rider device 20 can detect the sound of the vehicle door opening and closing. Alternatively, an environmental sensor of the driver device 30 can detect a change in the environmental conditions of the cabin, coinciding with the vehicle door opening and closing (e.g., change in barometric reading or cabin temperature). In variations, the microphone of the driver device 20 may detect other sounds which are indicators of trip termination, either to mark the point of trip termination or confirm the point of trip termination in combination with other data.

In some variations, determination of the trip termination point is based on multiple types of passive information and/or determinations (262). In one implementation, the collected passive information includes position information (e.g., from a GPS component of the rider device 20 and/or vehicle) and/or motion data (e.g., from accelerometer included with vehicle, telemetry data from on-board computing device of vehicle, etc.). The position information and/or motion data may be used to detect when the vehicle may have stopped. For example, the point of trip termination may be deemed to be the location where the departure event is detected, provided that a separately determined vehicle stopping point (such as determined through analysis of GPS data) verifies the location of the departure event (e.g., stopping point and location of departure point or approximately same position or within threshold). As an addition or variation, the point of trip termination may be deemed to be the stopping point if the stopping point and the location of the departure event are deemed to be different (e.g., stopping point and location of departure point are different by more than a predetermined threshold).

In some variations, a model is implemented to determine the point of trip termination (264). The model can incorporate information of different types in order to approximate with accuracy the point of trip termination. In some examples, the model can be based on (i) passive information that identifies a departure event, (ii) passive information that identifies a stopping location of the vehicle, and/or (iii) rider destination input 107. The model may be trained using data collected from monitoring vehicles of a given geographic region, and/or specific drivers.

As described, an example of FIG. 2B extends to a scenario in which the driver provides no trip termination input 133. For example, the driver may begin to look for a stopping space for the vehicle when he arrives at the approximate location of the drop-off location. Once stopped, the rider disembarks, at which time passive information from the driver device 20, or the combination of the driver device 20 and rider device 30 detect the rider has left the vehicle. Thus, the point of trip termination, coinciding with the actual stopping point where the rider leaves the vehicle (the point of trip termination), may be before or after an address provided by the rider as the destination input. In an example of FIG. 2B, the driver does not provide affirmative input about the point of trip termination. Rather, the service 100 automatically deduces the point of trip termination from one or more types of passive information.

With respect to examples such as described with FIG. 2A and FIG. 2B, the service 100 may collect passive information from the vehicle, and perform operations of methods such as described using resources of the service. Thus, the point of trip termination is determined remotely, in a manner that precludes (or hinders) the ability of driver or rider to influence the determination. This allows for a more accurate and reliable mechanism for determining points of trip termination.

While some examples provide for service 100 to perform methods and operations such as described with FIG. 2A and FIG. 2B, in variations, the driver and/or rider computing device 20, 30 can perform some or all operations for determining the point of trip termination. For example, the service application 190 of the driver device 20 may be used to perform one or more operations described with FIG. 2A and FIG. 2B, using background processes and/or programmatic functionality that is inaccessible to the driver (so that the driver cannot influence the determinations).

With reference to FIG. 3, the service 100 receives the trip termination input 133 from the driver (310). A determination is made as to whether the driver's vehicle is stationary when trip termination input 133 is received (315). If the driver's vehicle is determined to be stationary when the trip termination input 133 is received, then the service 100 determines that trip termination has occurred (318), and the location corresponding to the trip termination input 133 is deemed to be the point of trip termination.

If, however, the vehicle is not stopped or stationary when the trip termination input 133 is received, then a determination is made as to whether the vehicle has stopped in a given threshold of time or distance (e.g., within the last minute, or within 152 meters) (325). If the determination is that the vehicle has been stationary within the given threshold, then the point of trip termination is set to be the location where the trip data 105 indicates the vehicle stopped (328).

If the determination of (325) is that the vehicle has not stopped within the given threshold, then a determination is made as to whether the particular trip has a known destination (e.g., such as provided by the rider destination input 107) (335). If no known destination exists for the trip, then the point of trip termination is the location closest to the location of the trip termination input 133 where the vehicle stopped (338).

If the determination of (335) is that the trip has a known destination, then a determination is made as to whether location of the trip termination input 131 is within a designated threshold from the known location (345). If the vehicle is within the threshold, then the point of trip termination is set to be the known destination (e.g., destination identified by rider destination input 107) (348). Else, the service 100 may reject the driver's trip termination input 131, and the driver may be required to resubmit the trip termination input (352).

### HARDWARE DIAGRAMS

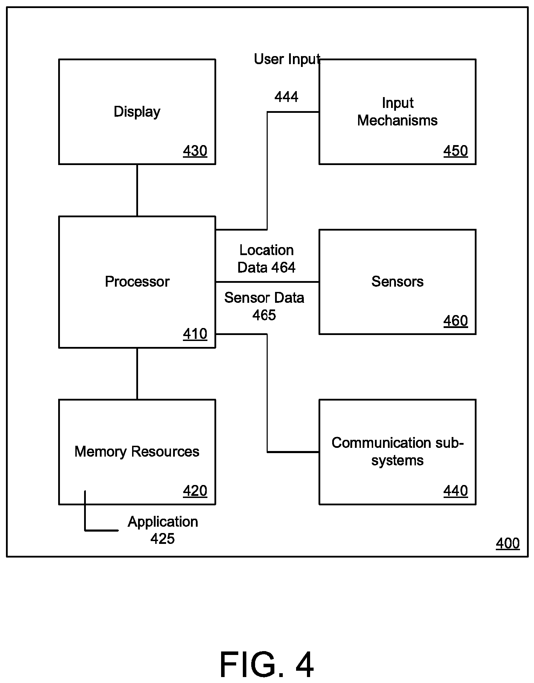

FIG. 4 is a block diagram that illustrates a mobile computing device upon which embodiments described herein may be implemented. In one example, a computing device 400 may correspond to a mobile computing device, such as a cellular device that is capable of telephony, messaging, and data services. The computing device 400 can correspond to, for example, driver device 20 or rider device 30. By way of example, the computing device 400 may correspond to a smartphone, handsets, wearable computing devices, or tablet devices which are wirelessly enabled (e.g., capable of cellular transmissions). The computing device 400 includes a processor 410, memory resources 420, a display device 430 (e.g., such as a touch-sensitive display device), one or more communication sub-systems 440 (including wireless communication sub-systems), input mechanisms 450 (e.g., an input mechanism can include or be part of the touch-sensitive display device), and one or more sensors 460, including a location detection mechanism (e.g., GPS receiver). In one example, at least one of the communication sub-systems 440 sends and receives cellular data over data channels and voice channels. The communications sub-systems 440 can include a cellular transceiver and one or more short-range wireless transceivers.

The processor 410 can provide a variety of content to the display 430 by executing instructions stored in the memory resources 420. The memory resources 420 can store instructions corresponding to a driver service application 425. As described with FIG. 1 (e.g., service application 190), the driver service application 425 can enable the driver to provide transport services, and to provide input corresponding to trip termination input 131 (see FIG. 1). For example, the processor 410 can execute the service application 425 to perform one or more processes, steps, and other functions described with implementations, such as described by FIGS. 1 through 3, and elsewhere in the application. Among the processes performed, the processor 410 may execute the service application 425 to signal trip data 105 (see FIG. 1) to the service 100. In example of FIG. 4, the trip data 105 can include location data 464 (e.g., as determined from the GPS component of the mobile computing device 400) and other sensor data 465 (e.g., motion data as determined from the accelerometer of the mobile computing device).

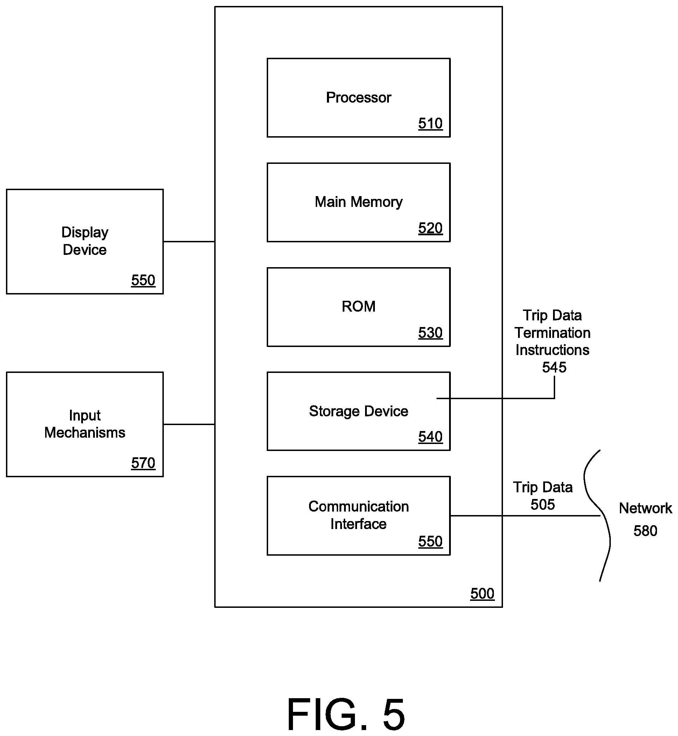

FIG. 5 is a block diagram that illustrates a computer system upon which examples described herein may be implemented. For example, in the context of FIG. 1, the 100 may be implemented using a computer system (or combination of computer systems) such as described by FIG. 5.

In one implementation, the computer system 500 includes processing resources, such as one or more processors 510, a main memory 520, a read-only memory (ROM) 530, a storage device 540, and a communication interface 550. The computer system 500 includes at least one processor 510 for processing information and the main memory 520, such as a random access memory (RAM) or other dynamic storage device, for storing information and instructions to be executed by the processor 510. The main memory 520 also may be used for storing temporary variables or other intermediate information during execution of instructions to be executed by the processor 510. The computer system 500 may also include the ROM 530 or other static storage device for storing static information and instructions for the processor 510. The storage device 540, such as a magnetic disk or optical disk, is provided for storing information and instructions. For example, the storage device 540 can correspond to a computer-readable medium that stores trip data termination instructions 545 for determining a point of trip termination, as described by examples of FIG. 1 through 3. In such examples, the computer system 500 can determine point of trip termination from driver input (e.g., trip termination input 131 from the driver) and passively collected data from the driver's device (e.g., trip data 105).

The communication interface 550 can enable the computer system 500 to communicate with one or more networks 580 (e.g., cellular network) through use of the network link (wirelessly or using a wire). Using the network link, the computer system 500 can communicate with a plurality of devices, such as the mobile computing devices of the riders and drivers (e.g., driver devices 20, rider devices 30). According to some examples, the computer system 500 can receive trip data 505 from the driver devices and use the trip data to determine the point of trip termination, such as described by some examples of FIGS. 1 through 3.

The computer system 500 can also include a display device 560, such as a cathode ray tube (CRT), an LCD monitor, or a television set, for example, for displaying graphics and information to a user. An input mechanism 570, such as a keyboard that includes alphanumeric keys and other keys, can be coupled to the computer system 500 for communicating information and command selections to the processor 510. Other nonlimiting, illustrative examples of the input mechanisms 570 include a mouse, a trackball, touch-sensitive screen, or cursor direction keys for communicating direction information and command selections to the processor 610 and for controlling cursor movement on the display 560.

Examples described herein are related to the use of the computer system 500 for implementing the techniques described herein. According to one example, those techniques are performed by the computer system 500 in response to the processor 510 executing one or more sequences of one or more instructions contained in the main memory 520. Such instructions may be read into the main memory 520 from another machine-readable medium, such as the storage device 540. Execution of the sequences of instructions contained in the main memory 520 causes the processor 510 to perform the process steps described herein. In alternative implementations, hard-wired circuitry may be used in place of or in combination with software instructions to implement examples described herein. Thus, the examples described are not limited to any specific combination of hardware circuitry and software.

## Claims

1. A method for determining a point of termination for a vehicle trip provided by a driver in connection with vehicle trips arranged through a transport arrangement service (100), the method being performed by one or more processors of the transport arrangement service (100) in communication with a computing device (20) of the driver over one or more networks (12) and comprising:
receiving and collecting trip data over the course of the trip in progress from the computing device (20) of the driver that is within the vehicle during the trip, the trip data including position information from a GPS device of the computing device (20) of the driver;
analyzing the trip data (105), including determining one or more stopping points of the vehicle during the trip;
receiving, over the one or more networks, input data indicating a trip termination input (133) from the computing device of the driver (20), the trip termination input signaling termination of the trip by the driver at a location;
**characterized in**
in response to the trip termination input (133) signaling termination of the trip, determining whether the location corresponding to the trip termination input (133) is valid by comparing the location corresponding to the trip termination input (133) to the closest location where the trip data indicates the vehicle has stopped, if the distance in between is less than a threshold, validating the location corresponding to the trip termination input (133) as the point of termination for the trip, and if the distance in between exceeds the threshold, correcting the location corresponding to the trip termination input (133) by defining the closest location where the trip data indicates the vehicle has stopped as the valid point of termination for the trip.

2. The method of Claim 1, wherein the trip data include sensor data received from the computing device (20) of the driver, the sensor data further comprising an audio signal from a microphone of the computing device (20) of the driver, the audio signal comprising a characteristic indicating a rider leaving the vehicle.

3. The method of Claim 1, wherein correcting the location corresponding to the trip termination input (133) includes extending the trip to the closest location where the trip data indicates the vehicle has stopped.

4. The method of Claim 1, wherein correcting the termination location includes shortening the trip to the closest location where the trip data indicates the vehicle has stopped.

5. The method of Claim 1, wherein determining whether the location corresponding to the trip termination input (133) is valid includes determining a velocity of the vehicle of the driver before and after the driver provides the trip termination input (133).

6. The method of Claim 5, wherein determining the velocity of the vehicle is based on the position information from the GPS device.

7. The method of Claim 2, wherein the sensor data comprises acceleration data from one or more motion sensing components of the computing device (20) of the driver.

8. The method of Claim 6, wherein determining the point of termination further includes determining the velocity of the vehicle when the driver provided the trip termination input (133) signaling termination of the trip.

9. The method of Claim 2, wherein the sensor data further corresponds to an environmental sensor that detects an environmental characteristic that is altered when the rider leaves the vehicle.

10. A non-transitory computer readable medium that stores instructions, which when executed, cause one or more processors of a computing system to perform a method of any of the preceding claims.

11. A computer system comprising:
a memory to store a set of instructions;
one or more processors, wherein the one or more processors access the set of instructions to perform a method of any of the preceding claims 1 to 9.

## Patentansprüche

1. Verfahren zur Bestimmung eines Endpunkts für eine Fahrzeugfahrt, die von einem Fahrer im Zusammenhang mit über einen Transportvermittlungsdienst (100) arrangierten Fahrten bereitgestellt wird,
wobei das Verfahren durch einen oder mehrere Prozessoren des Transportvermittlungsdienstes (100) ausgeführt wird, die mit einer Computervorrichtung (20) des Fahrers über ein oder mehrere Netzwerke (12) kommunizieren, und umfasst:
Empfangen und Sammeln von Fahrtdaten im Verlauf der laufenden Fahrt von der Computervorrichtung (20) des Fahrers, das sich während der Fahrt im Fahrzeug befindet, wobei die Fahrtdaten Positionsinformationen eines GPS-Geräts der Computervorrichtung (20) des Fahrers umfassen;
Analysieren der Fahrtdaten (105), einschließlich Bestimmen eines oder mehrerer Haltepunkte des Fahrzeugs während der Fahrt;
Empfangen, über das oder die mehreren Netzwerke, von Eingabedaten, die eine Fahrtende-Eingabe (133) von der Computervorrichtung des Fahrers (20) anzeigen, wobei die Fahrtende-Eingabe die Beendigung der Fahrt durch den Fahrer an einem Ort signalisiert;
**gekennzeichnet durch**, dass
als Antwort auf die Fahrtende-Eingabe (133), die das der Fahrt signalisiert, bestimmt wird, ob der Ort entsprechend der Fahrtende-Eingabe (133) gültig ist, durch Vergleich des Ortes entsprechend der Fahrtende-Eingabe (133) mit dem nächstgelegenen Ort, an dem die Fahrtdaten anzeigen, dass das Fahrzeug angehalten hat; falls der Abstand dazwischen unter einem Schwellenwert liegt, der Ort entsprechend der Fahrtende-Eingabe (133) als Beendigungszeitpunkt der Fahrt validiert wird; und falls der Abstand den Schwellenwert überschreitet, der Ort entsprechend der Fahrtende-Eingabe (133) korrigiert wird, indem der nächstgelegene Ort, an dem die Fahrtdaten anzeigen, dass das Fahrzeug angehalten hat, als gültiger Endpunkt der Fahrt festgelegt wird.

2. Verfahren nach Anspruch 1, wobei die Fahrtdaten Sensordaten umfassen, die von der Computervorrichtung (20) des Fahrers empfangen werden, wobei die Sensordaten ferner ein Audiosignal eines Mikrofons der Computervorrichtung (20) des Fahrers umfassen, wobei das Audiosignal eine Charakteristik enthält, die ein Verlassen eines Fahrgasts des Fahrzeugs anzeigt.

3. Verfahren nach Anspruch 1, wobei das Korrigieren des Ortes entsprechend der Fahrtende-Eingabe (133) umfasst, die Fahrt bis zum nächstgelegenen Ort zu verlängern, an dem die Fahrtdaten anzeigen, dass das Fahrzeug angehalten hat.

4. Verfahren nach Anspruch 1, wobei das Korrigieren des Ortes entsprechend der Fahrtende-Eingabe (133) umfasst, die Fahrt bis zum nächstgelegenen Ort zu verkürzen, an dem die Fahrtdaten anzeigen, dass das Fahrzeug angehalten hat.

5. Verfahren nach Anspruch 1, wobei das Bestimmen, ob der Ort entsprechend der Fahrtende-Eingabe (133) gültig ist, ferner umfasst, eine Geschwindigkeit eines Fahrzeugs des Fahrers, bevor und nachdem der Fahrer die Fahrtende-Eingabe (133) bereitstellt, zu bestimmen.

6. Verfahren nach Anspruch 5, wobei die Geschwindigkeit des Fahrzeugs auf Basis der Positionsinformation des GPS-Geräts bestimmt wird.

7. Verfahren nach Anspruch 2, wobei die Sensordaten Beschleunigungsdaten von einem oder mehreren Bewegungserfassungskomponenten der Computervorrichtung (20) des Fahrers umfassen.

8. Verfahren nach Anspruch 6, wobei das Bestimmen des Endpunkts ferner umfasst, die Geschwindigkeit des Fahrzeugs zu bestimmen, wenn der Fahrer die Fahrtende-Eingabe (133) bereitgestellt hat, die das Ende der Fahrt signalisiert.

9. Verfahren nach Anspruch 2, wobei die Sensordaten ferner einem Umweltsensor entsprechen, das eine Umweltcharakteristik detektiert, die sich ändert, wenn der Fahrgast aussteigt.

10. Nichtflüchtiges computerlesbares Medium, das Anweisungen speichert, welche beim Ausführen einen oder mehrere Prozessoren eines Computersystems veranlassen, ein Verfahren nach einem der vorherigen Ansprüche durchzuführen.

11. Computersystem umfassend:
einen Speicher zur Speicherung eines Satzes von Anweisungen;
einen oder mehrere Prozessoren, wobei der eine oder die mehreren Prozessoren auf den Satz von Anweisungen zugreifen, um ein Verfahren nach einem der Ansprüche 1 bis 9 durchzuführen.

## Revendications

1. Procédé permettant de déterminer le point d'arrivée d'un trajet effectué par un conducteur dans le cadre de trajets organisés par un service d'organisation de transport (100), ledit procédé étant exécuté par un ou plusieurs processeurs du service d'organisation de transport (100) en communication avec un dispositif informatique (20) du conducteur via un ou plusieurs réseaux (12) et comprenant :
la réception et la collecte de données de trajet au cours du trajet en cours à partir du dispositif informatique (20) du conducteur qui se trouve à l'intérieur du véhicule pendant le trajet, les données de trajet comprenant des informations de position provenant d'un dispositif GPS du dispositif informatique (20) du conducteur ;
l'analyse des données de trajet (105), y compris la détermination d'un ou plusieurs points d'arrêt du véhicule pendant le trajet ;
la réception, via le ou les réseaux, de données d'entrée indiquant une entrée de fin de trajet (133) provenant du dispositif informatique du conducteur (20), l'entrée de fin de trajet signalant la fin du trajet par le conducteur à un emplacement ;
**caractérisé en ce que**
en réponse à l'entrée de fin de trajet (133) signalant la fin du trajet, déterminer si l'emplacement correspondant à l'entrée de fin de trajet (133) est valide en comparant l'emplacement correspondant à l'entrée de fin de trajet (133) à l'emplacement le plus proche où les données de trajet indiquent que le véhicule s'est arrêté, si la distance entre les deux est inférieure à un seuil, valider l'emplacement correspondant à l'entrée de fin de trajet (133) comme point de fin du trajet, et si la distance entre les deux dépasse le seuil, corriger l'emplacement correspondant à l'entrée de fin de trajet (133) en définissant l'emplacement le plus proche où les données de trajet indiquent que le véhicule s'est arrêté comme point de fin valide du trajet.

2. Procédé selon la revendication 1, dans lequel les données de trajet comprennent des données de capteur reçues du dispositif informatique (20) du conducteur, les données de capteur comprenant en outre un signal audio provenant d'un microphone du dispositif informatique (20) du conducteur, le signal audio comprenant une caractéristique indiquant qu'un passager quitte le véhicule.

3. Procédé selon la revendication 1, dans lequel la correction de l'emplacement correspondant à l'entrée de fin de trajet (133) comprend l'extension du trajet jusqu'à l'emplacement le plus proche où les données de trajet indiquent que le véhicule s'est arrêté.

4. Procédé selon la revendication 1, dans lequel la correction de l'emplacement de fin de trajet comprend le raccourcissement du trajet jusqu'à l'emplacement le plus proche où les données de trajet indiquent que le véhicule s'est arrêté.

5. Procédé selon la revendication 1, dans lequel la détermination de la validité de l'emplacement correspondant à l'entrée de fin de trajet (133) comprend la détermination d'une vitesse du véhicule du conducteur avant et après que le conducteur a fourni l'entrée de fin de trajet (133).

6. Procédé selon la revendication 5, dans lequel la détermination de la vitesse du véhicule est basée sur les informations de position provenant du dispositif GPS.

7. Procédé selon la revendication 2, dans lequel les données du capteur comprennent des données d'accélération provenant d'un ou plusieurs composants de détection de mouvement du dispositif informatique (20) du conducteur.

8. Procédé selon la revendication 6, dans lequel la détermination du point de fin comprend en outre la détermination de la vitesse du véhicule au moment où le conducteur a fourni l'entrée de fin de trajet (133) signalant la fin du trajet.

9. Procédé selon la revendication 2, dans lequel les données de capteur correspondent en outre à un capteur environnemental qui détecte une caractéristique environnementale qui est modifiée lorsque le conducteur quitte le véhicule.

10. Support non transitoire lisible par ordinateur qui stocke des instructions qui, lorsqu'elles sont exécutées, amènent un ou plusieurs processeurs d'un système informatique à mettre en œuvre un procédé selon l'une quelconque des revendications précédentes.

11. Système informatique comprenant :
une mémoire pour stocker un ensemble d'instructions ;
un ou plusieurs processeurs, dans lequel le ou les processeurs accèdent à l'ensemble d'instructions pour mettre en œuvre un procédé selon l'une quelconque des revendications 1 à 9 précédentes.
